# EUROPEAN PATENT APPLICATION

(11) **EP 4 625 660 A1**
(43) Date of publication of application: **01.10.2025**
(21) Application number: 23907604.5
(22) Date of filing: 14.12.2023
(51) Int. Cl.: H01M 50/264, H01M 50/211, H01M 50/251

(54) **BATTERY PACK AND ENERGY STORAGE SYSTEM COMPRISING SAME**

(30) Priority: 22.12.2022 KR 20220182358
(71) Applicant: LG Energy Solution, Ltd., Seoul 07335 (KR)
(72) Inventor: KONG, Yu-Dam, Daejeon 34122 (KR); OK, Seung-Min, Daejeon 34122 (KR); JO, Sang-Hyun, Daejeon 34122 (KR); CHO, Young-Bum, Daejeon 34122 (KR)
(74) Representative: Plasseraud IP
(86) International application number: PCT/KR2023/020695
(87) International publication number: WO 2024/136318

(57) **Abstract**

There is provided a battery pack capable of securing electric insulation and reducing weight thereof by improving the pack case, and an energy storage system including the same.

A battery pack of the present disclosure includes: at least one cell assembly including a bus-bar frame assembly and a plurality of battery cells; a bottom plate configured such that the cell assembly is seated thereon; and a reinforcement member configured to fix the bus-bar frame assembly and the bottom plate to each other.

## Description

### TECHNICAL FIELD

The present disclosure relates to a battery pack and an energy storage system including the same, and more specifically, it relates to a battery pack including an improved pack case, and an energy storage system including the same.

The present application claims priority to Korean Patent Application No. 10-2022-0182358 filed on December 22, 2022 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Energy Storage Systems (ESSs), which have recently been attracting attention, are devices capable of storing generated electricity in a battery pack and supplying the same to consumers when electricity is needed, thereby maximizing power use efficiency. In the ESS, a plurality of battery packs constitutes one battery rack, and dozens to hundreds of battery racks are collected to produce one system. In addition, it is also used in conjunction with a UPS (uninterruptible power supply), which ensures stable power supply in response to sudden power supply interruptions or abnormalities, and solar power generation systems, which are power generation devices for converting sunlight into electric energy. In addition, as electric vehicles are widely commercialized, such an ESS may be applied to electric charging stations capable of charging electric vehicles.

The battery pack used in the ESS may be configured as a plurality of battery cells stored in a pack case. Here, the pack case of the ESS battery pack is usually made of a highly rigid metal material, for example, steel, to support the high load of a plurality of battery cells.

However, in this case, there is a problem with the electric insulation between the pack case and electrical components, especially between the pack case and the battery cell, so additional insulation structures or separate insulating components must be applied between the pack case and the battery cell in order to solve the problem. This causes the problem of increasing the manufacturing processes, tact time, and production cost of the battery pack. In addition, employment of the pack case made of steel makes the battery pack too heavy, making it difficult to transport and handle the battery pack, and a rack case capable of holding the heavy battery pack is also required.

Therefore, there is a need to develop technology for a pack case structure capable of securing electric insulation between the pack case and electrical components and attaining weight reduction of the battery pack.

### DISCLOSURE

### Technical Problem

The present disclosure has been designed to solve the problems of the related art, and therefore the present disclosure is directed to providing a battery pack capable of securing electric insulation and reducing weight thereof by improving the pack case, and an energy storage system including the same.

### Technical Solution

According to one aspect of the present disclosure, there is provided a battery pack including: at least one cell assembly comprising a bus-bar frame assembly and a plurality of battery cells; a bottom plate configured such that the cell assembly is seated thereon; and a reinforcement member configured to fix the bus-bar frame assembly and the bottom plate to each other.

The bottom plate includes: a base plate on which the cell assembly is seated; and a support frame provided on opposite sides of an upper surface of the base plate and having an insertion portion configured such that an outer surface thereof is recessed inward, and the reinforcement member is inserted into the insertion portion.

The insertion portion may be provided along the longitudinal direction of the bottom plate.

The reinforcement member may be a rod extending in the longitudinal direction.

The base plate and the support frame may be integrally injection-molded.

The reinforcement member is preferably inserted into the insertion portion to connect the bus-bar frame assembly and the bottom plate via the bus-bar frame assembly.

The reinforcement member may be a pair of steel pipes.

The bottom plate may be made of a plastic material, and the reinforcement member may be made of a metal material.

The battery pack of the present disclosure may further include a sealing member configured to fix a position of the reinforcement member.

For example, the sealing member may be a rubber packing
The at least one cell assembly may be a plurality of cell assemblies disposed side by side, and the support frame of the bottom plate may be configured to be provided on edges extending in an arrangement direction of the cell assemblies and protrude upward at predetermined intervals along the arrangement direction of the cell assembly to support the bus-bar frame assembly of each cell assembly.

The bottom plate may further include a concave portion provided between the adjacent support frames, and the bus-bar frame assembly of each cell assembly may include a bus-bar frame made of an electrically insulating material, and the bus-bar frame may include: a mounted plate disposed on an upper surface of the support frame; and a seating guide block protruding downward from the mounted plate so as to be inserted into the corresponding concave portion.

The mounted plate and the seating guide block may be integrally injection-molded with the bus-bar frame.

The seating guide block may pass vertically between the support frames and may be inserted into the concave portion.

The seating guide block and the support frame may be configured to form a continuous assembled wall in the arrangement direction of the cell assemblies when the cell assemblies are seated on the bottom plate while each seating guide block is inserted into each corresponding concave portion, and the assembled wall may define the insertion portion.

The seating guide block and the support frame may restrict a movement of the reinforcement member in a longitudinal direction and a height direction of the reinforcement member.

The assembled wall may include an upper reception wall, a lower reception wall, and a side reception wall, and the reinforcement member is a rectangular steel pipe, and the upper portion of the steel pipe is in contact with an upper reception wall, the lower portion of the steel pipe is in contact with the lower reception wall, and one side portion of the steel pipe is in contact with the side reception wall.

In addition, the present disclosure provides an energy storage system including at least one battery pack according to the present disclosure.

### Advantageous Effects

According to one aspect of the present disclosure, since the bottom plate constituting the pack case is made of a plastic injection-molded product, it is possible to secure insulation between the pack case and the battery cell and reduce the weight of the battery pack, compared to a pack case made of steel.

In particular, according to one aspect of the present disclosure, it is possible to provide a battery pack configured to perfectly implement insulation by applying an injection-type pack case without separate insulating components. This ensures electric insulation between the pack case and the battery cell without additional insulating structures or separate insulating components, so it is possible to reduce the manufacturing processes, tact time, and manufacturing cost of the battery pack.

According to the present disclosure, even if the pack case is made of a plastic injection-molded product, mechanical properties of the pack case can be improved by inserting a reinforcement member into the pack case, thereby securing structural stability. The pack case including such a reinforcement member has improved in structural rigidity and safety to firmly support a plurality of battery cells.

In addition, according to another aspect of the present disclosure, the bottom plate and the bus-bar frame assembly are fixed to each other by the reinforcement member to provide a solid fastening configuration, thereby improving resistance to bending or sagging.

Furthermore, it is possible to minimize the fixing structure using bolts and nuts through the fixing configuration of the reinforcement member. Accordingly, in particular, according to the present disclosure, there is provided a structure to structurally assemble and fix internal components by minimizing the fixing structure using bolts and nuts in the battery pack. According to the present disclosure, design and management factors of the battery pack are minimized to suppress the problems resulting therefrom. That is, it is possible to provide a battery pack that has fewer design variables to be considered to fix internal pack elements than those when using bolts and nuts, is easier to manage processes than when using bolts and nuts, and does not increase tact time.

According to the present disclosure, material costs are reduced by simplifying the structure and reducing the number of components. According to the present disclosure, productivity is improved due to reduced tact time. According to the present disclosure, there is also the effect of reducing the weight of the battery pack through simplification of processes and structures. According to the present disclosure, since the plastic-injected bottom plate, instead of a steel bottom plate, is used as the pack case, the case is light in weight, removes the weight of bolts and nuts, and does not require resin for implementing an injection structure for fixing bolts and nuts, thereby further reducing weight thereof.

As described above, the present disclosure may provide a battery pack that has significant effects of reinforcing the rigidity of the bottom plate manufactured by injection molding through the reinforcement member, stably fixing the cell assembly to the bottom plate, and reducing the weight of the battery pack.

In addition, by including this battery pack, it is possible to provide an energy storage system that is safe, easy to transport and install, and has a lower production cost.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is a diagram illustrating the battery pack in FIG. 1 from which a top plate is separated.
FIG. 3 is a partially exploded perspective view illustrating the primary elements of the battery pack in FIG. 1.
FIG. 4 is a perspective view illustrating a cell assembly of a battery pack according to an embodiment of the present disclosure.
FIG. 5 is a perspective view illustrating a bottom plate and a reinforcement member of a battery pack according to an embodiment of the present disclosure.
FIG. 6 is a partially enlarged view of FIG. 5.
FIG. 7 is a detailed diagram of the bus-bar frame in FIG. 4.
FIGS. 8 and 9 are diagrams illustrating the assembly process or assembly structure of a bottom plate and a plurality of cell assemblies according to an embodiment of the present disclosure.
FIG. 10 is a cross-sectional view of the battery pack in FIG. 1.
FIG. 11 is a schematic diagram of an energy storage system according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

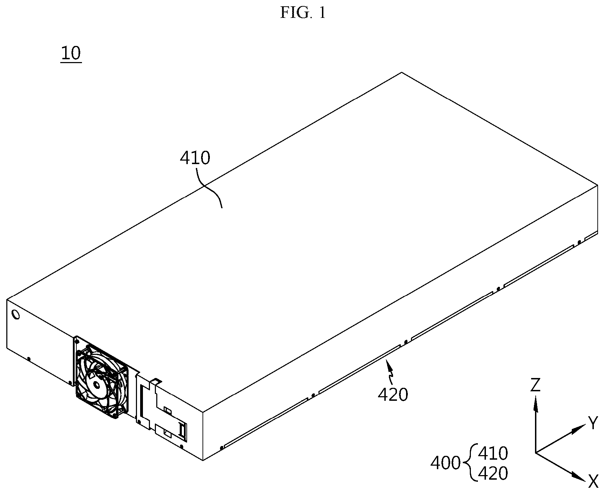

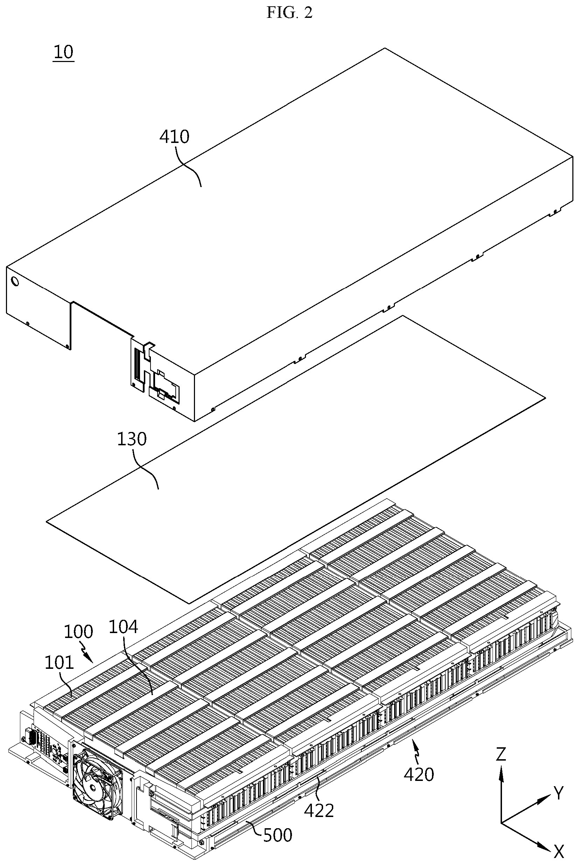

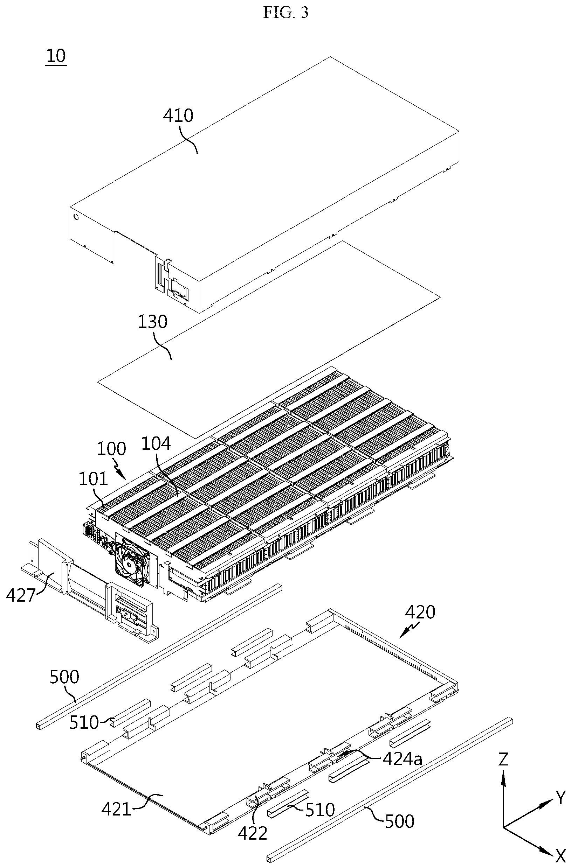

FIG. 1 is a perspective view of a battery pack according to an embodiment of the present disclosure, FIG. 2 is a diagram illustrating the battery pack in FIG. 1 from which a top plate is separated, and FIG. 3 is a partially exploded perspective view illustrating the primary elements of the battery pack in FIG. 1.

Referring to FIGS. 1 to 3, a battery pack 10 according to the present disclosure may be a three-dimensional structure having a predetermined length, width, and height in the X-axis, Y-axis, and Z-axis directions, respectively. The battery pack 10 includes a cell assembly (CMA) 100, a pack case 400, and a reinforcement member 500. The pack case 400 may include a top plate 410 and a bottom plate 420.

The battery pack 10 according to the present disclosure includes one or more cell assemblies 100. Here, the cell assembly 100 indicates a plurality of grouped battery cells 101.

The battery pack 10 may be configured to include a plurality of cell assemblies 100. For example, as shown in the implemented configuration of FIG. 2, the battery pack 10 may include four cell assemblies 100 disposed side by side. In addition, the battery pack 10 is a pack case 400 to protect the four cell assemblies 100 from the outside and includes a bottom plate 420. The number of cell assemblies 100 may vary.

The bottom plate 420 is an element for storing the cell assembly 100. If the top plate 410 is coupled to the bottom plate 420, an empty space to accommodate the cell assembly 100 may be formed therein, so the cell assembly 100 may be stored in the empty space.

The bottom plate 420 may support the cell assembly 100. In particular, the bottom plate 420 may support substantially the lower surface of the cell assembly 100. This bottom plate 420 may be mounted to a machine or device that uses the battery pack 10 as an energy source. For example, the bottom plate 420 may be mounted to an energy storage system, an electric vehicle, or the like.

In the present embodiment, the bottom plate 420 may include a base plate 421 supporting the four cell assemblies 100 at the bottom of the cell assemblies 100. The base plate 450 supports the cell assembly 100 and constitutes the primary portion of the bottom plate 420. Specifically, the base plate 421 may cover the lower surface of the cell assembly 100.

The top plate 410 mainly covers the upper surface of the cell assembly 100 and is coupled to the bottom plate 420. The top plate 410 may be configured in the form of a rectangular box having an open bottom, and the bottom plate 420 may be configured such that a plurality of cell assemblies 100 is seated thereon. For example, the bottom plate 420 may be configured substantially as a plate having an enough area for a plurality of cell assemblies 100 to be seated thereon.

The bottom plate 420 may further include a front plate 427 on at least one side of the base plate 421. The front plate 427 may be in the form of a vertical plate provided on one edge of the base plate 421 and may be an electrical-equipment installation portion. For example, a terminal block and a BMS assembly may be mounted on the outer surface of the front plate 427. The front plate 427 may be equipped with an exhaust fan. In this implemented configuration, the base plate 421 may constitute a rear plate compared to the front plate 427.

A mica sheet 130 may be provided on the plurality of cell assemblies 100. The mica sheet 130 has excellent heat resistance to withstand high-temperature vent gas and sparks. The mica sheet 130 may easily change its shape and, when flame occurs in one battery cell 101, block the flame or heat from spreading to other battery cells 101 or the top plate 410.

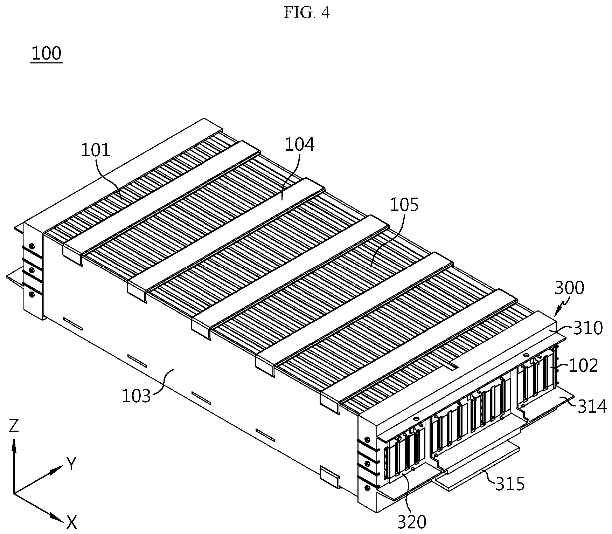

Next, the configuration of the cell assembly 100 will be described in detail with reference to FIG. 4.

FIG. 4 is a perspective view illustrating a cell assembly of a battery pack according to an embodiment of the present disclosure.

Referring to FIG. 4, the cell assembly 100 may include a plurality of battery cells 101. A predetermined number of battery cells 101 may constitute one cell assembly 100. The number of battery cells 101 may vary depending on the required output voltage or charge/discharge capacity. The battery cell 101 may be configured as a pouch-type secondary battery, and a plurality of battery cells 101 may be electrically connected to each other. For electrical connection, the cell assembly 100 includes a bus-bar frame assembly 300.

Each battery cell 101 may include an electrode assembly, a battery case accommodating the electrode assembly, and an electrode lead 102 that protrudes out of the battery case and is electrically connected to the electrode assembly. The electrode lead 102 may include a positive electrode lead and a negative electrode lead such that the positive electrode lead is connected to a positive electrode plate of the electrode assembly and such that the negative electrode lead is connected to a negative electrode plate of the electrode assembly.

In the illustrated example, each battery cell 101 includes a pair of electrode leads 102 that protrude from both sides of the battery cell 101 in the longitudinal direction (the X-axis direction) thereof. That is, the electrode lead 102 may be provided at the front and rear portions of the battery cell 101, which is a pouch-type secondary battery, in the longitudinal direction, respectively.

In this embodiment, the battery cells 101 may be arranged side by side in the horizontal direction (the Y-axis direction) while standing in the up/down direction (the Z-axis direction). That is, the battery cells 101 may be provided to be stacked in the horizontal direction while standing such that the wide surface thereof is perpendicular to the ground. A predetermined number of battery cells 101 may be stacked to form a battery cell stack.

The bus-bar frame assembly 300 may be disposed at each of the front and rear of the battery cell stack and at each of the front and rear of the battery cell 101 so as to cover the same. The bus-bar frame assembly 300 includes a bus-bar frame 310 and a plurality of bus-bars 320. Each bus-bar frame 310 may have a lead slit through which a predetermined number of electrode leads 102 pass in the front/back direction (the X-axis direction). The lead slits may be provided at predetermined intervals in the stacking direction of the battery cell 101.

The plurality of bus-bars 320 may be made of electrically conductive metal materials such as copper, aluminum, nickel, or the like and may be configured in the form of a bar or plate. The plurality of bus-bars 320 may be mounted to the bus-bar frame 310 at regular intervals in the stacking direction of the battery cells 101.

The electrode lead 102 of the battery cell 101 may extend to the outside of the bus-bar frame 310 by passing through a corresponding lead slit. The electrode lead 102 extending to the outside of the bus-bar frame 310 may be bent and fixedly attached to the surface of a corresponding bus-bar 320. For example, the bus-bar 320 and the electrode lead 102 may be fixedly coupled to each other by laser welding or ultrasonic welding. For example, the positive electrode leads of two battery cells 101 are attached to a specific bus-bar 320 while overlapping each other, and the negative electrode leads of two other battery cells 101 are attached to the specific bus-bar 320 while overlapping each other. Thus, the four battery cells 101 may be connected to each other in series and/or parallel.

The bus-bar frame 310 may attain electric insulation. The bus-bar frame 310 may be manufactured as a plastic structure by injection molding, so separate insulation treatment or insulating components are not necessary. In addition, this helps reduce weight of the battery pack.

In addition, it is preferably configured as an injection-molded structure to implement a mating part with the bottom plate 420. In the battery pack 10 according to the present embodiment, the bus-bar frame 310 of the bus-bar frame assembly 300 may further include a mounted plate 314 to be seated on an upper surface of a support frame 422 of the bottom plate 420, and a seating guide block 315 protruding downward from the mounted plate 314. The mounted plate 314 and the seating guide block 315 are elements to improve assembly and fixation between the plurality of cell assemblies 100 and the bottom plate 420. The mounted plate 314 and the seating guide block 315 may be formed integrally with the bus-bar frame 310 by injection molding. The mounted plate 314 and the seating guide block 315 will be described in more detail below in connection with the bottom plate 420.

The cell assembly 100 may further include an end plate 103, a strap 104, and a compressible foam pad 105 for mechanical binding.

A pair of end plates 103 is provided to come into contact with the leftmost battery cell 101 and the rightmost battery cell 101 of the battery cell stack. The end plate 103 may press and protect the battery cells 101. The end plates 103 may be assembled to the bus-bar frame 310. It is possible to maintain pressing force on the battery cell stack by coupling the end plates 103 to the bus-bar frame 310. The end plate 103 may be configured as a flat rigid plate. An insulating sheet may be further attached thereto. The insulating sheet may be configured in the form of a thin sheet made of a material with insulation, fire resistance, and heat insulation. For example, silicon or mica may be used as the material for the insulating sheet.

The foam pad 105 may be disposed between the end plate 103 and the battery cell 101 and/or between the battery cells 101. As described above, by employing the foam pad 105, the surface pressure caused by the end plate 103 may be applied uniformly to the battery cells 101 without damaging the surface of the battery cells 101. In addition, the foam pad 105 may absorb or withstand the impact when an external force is applied, thereby mitigating the impact transmitted to other parts. In addition, it may be configured to suppress swelling that may occur in the cell assembly 100.

Meanwhile, the strap 104 may be included as a means to strengthen the pressing force on the battery cell stack. The strap 104 may be provided to surround the upper and lower periphery of the battery cell stack in the stacking direction of the battery cells 101. The strap 104 may be made of a metal material with excellent mechanical rigidity. An insulating sheet may be further attached to the surface where the strap 104 surrounds the battery cell stack for electric insulation from the battery cells 101. The insulating sheet may be configured in the form of a thin sheet made of a material with insulation, fire resistance, and heat insulation. For example, silicon or mica may be used as the material for the insulating sheet.

Referring back to FIGS. 1 to 3, the bottom plate 420 may be made of a plastic material. The entirety of the bottom plate 420 may be made of a plastic material. In particular, the bottom plate 420 may be configured as a plastic injection-molded product. As described above, if the bottom plate 420 is made of a plastic injection-molded product, insulation with the battery cell 101 may be secured.

A plurality of cell assemblies 100 may be seated and supported on the bottom plate 420. In the illustrated example, four cell assemblies 100 having electrode leads protruding in both directions along the X-axis direction are arranged side by side in the Y-axis direction, and the bus-bar frame assemblies 300 for connecting the electrode leads in the cell assembly 100 are disposed on both sides of the bottom plate 420. In the case where the cell assembly has an electrode lead protruding in one direction along the X-axis, the bus-bar frame assembly may be disposed on one side of the bottom plate.

In particular, the bottom plate 420 is preferably configured as an injection-molded structure capable of providing electric insulation and implementing a mating part with the cell assembly 100. The bottom plate 420 may be made of a plastic structure through injection molding, so separate insulation treatment or insulating components are not necessary. In addition, the pack case may be made lighter than when it is made of metal.

The pack case in a conventional battery pack is manufactured by extrusion or is made of a rigid material such as a steel plate. This requires additional components for insulation, thereby increasing the weight and cost thereof. Since the battery pack 10 according to the present disclosure employs an injection-molded pack case, there is no need to apply additional insulating components. Therefore, weight and cost may be reduced.

However, the application of the plastic injection-molded product may cause a problem with the structural safety of the bottom plate 420. Moreover, as the size of the bottom plate 420 increases, the bottom plate 420 of a plastic injection-molded product may be more prone to bending or sagging and may be weaker in strength or rigidity, compared to the conventional pack case made of steel, failing to providing stable support.

Accordingly, in the present embodiment, a reinforcement member 500 is provided on the bottom plate 420. That is, the structural rigidity of the injection-molded pack case is supplemented with a reinforcement member 500 that may be a steel pipe for machine structure. The reinforcement member 500, which has a smaller volume and weight than the steel pack case of the conventional battery pack, may sufficiently supplement the rigidity to a desired strength. Therefore, the battery pack 10 according to the present disclosure may reduce the weight and cost thereof, compared to the conventional battery pack.

The bottom plate 420 may have an insertion portion 424a provided in the longitudinal direction and formed such that an outer surface is recessed inward. In particular, the insertion portion 424a may be provided on opposite sides of an upper surface of the base plate 421 of the bottom plate 420, and in order to configure the insertion portion 424a, the bottom plate 420 includes a support frame 422. The base plate 421 and the support frame 422 may be injection-molded as one piece. Since the bottom plate 420 is made of a plastic injection-molded product described above, it is possible to secure convenience in processing, as well as ensuring insulation with the battery cell 101, and reduce manufacturing processes. As described above, the bottom plate 420 made of a plastic injection-molded product may ensure electric insulation without additional insulating structures or separate insulating components, so it is possible to reduce the tact time and manufacturing cost of the battery pack 10.

The reinforcement member 500 may be inserted into the bottom plate 420. Specifically, the reinforcement member 500 may be inserted into the insertion portion 424a of the bottom plate 420. In particular, the reinforcement member 500 may be configured as a rod extending long in one direction so as to be inserted into the insertion portion 424a provided in the longitudinal direction of the bottom plate 420. The insertion portion 424a may be provided on opposite sides of an upper surface of the base plate 421. Accordingly, the reinforcement member 500 may be inserted from the side of the battery pack 10 and may extend in the longitudinal direction of the bottom plate 420. That is, the reinforcement member 500 may be configured to extend from the front to the rear of the battery pack 10, thereby securing additional rigidity and safely protecting the internal elements supported by the bottom plate 420. Since the insertion portion 424a is provided on the bottom plate 420 such that an outer surface thereof is recessed inward, the reinforcement member 500 may be easily inserted into the insertion portion 424a by simply pushing the reinforcement member 500 inward from the outer surface of the bottom plate 420, that is, in the lateral direction. This bottom plate 420 has a relatively simple structure and a space and shape suitable for accommodating the reinforcement member 500 therein, and is easily handled because assembly is performed only by pushing the reinforcement member 500 into the insertion portion 424a, thereby facilitating assembly due to easy assembly by insertion of the reinforcement member 500.

Meanwhile, the support frame 422 may be configured to stop the reinforcement member 500 at both ends thereof in the longitudinal direction to prevent the reinforcement member 500 inserted from the side from sliding to the left or right in the longitudinal direction. In the case where a plurality of support frames 422 is provided in the longitudinal direction, a stopping wall may be provided on the outermost support frame 422 to restrict the left or right movement of the reinforcement member 500 at both ends in the longitudinal direction.

The reinforcement member 500 may be made of a material with higher strength than the bottom plate 420. For example, the reinforcement member 500 may be made of metal. As described above, if the reinforcement member 500 is made of a material different from that of the bottom plate 420, merits of the respective members may be utilized.

As an example, the reinforcement member 500 may be a pair of steel pipes. In addition, as shown in FIG. 3, the reinforcement member 500 may be a rectangular steel pipe with a square cross-section. In addition, the reinforcement member 500 may also be configured in the form of a hollow pipe as shown in the drawing. In this case, the weight may be further reduced. However, the present disclosure is not limited to the above forms of the reinforcement member 500, and any form suitable for fixing the bus-bar frame assembly 300 and the bottom plate 420 to each other may be utilized.

The reinforcement member 500 is preferably a steel pipe. Although the steel pipe may be made of steel, the material of the steel pipe is not limited to steel in the present disclosure, and any material having a strength similar to steel may be applied. For example, the steel pipe may be a pipe of metal different from steel or may be a carbon pipe.

A pair of reinforcement members 500 may be inserted into the insertion portions 424a of the bottom plate 420. Accordingly, both sides of the bottom plate 420 may be firmly supported. As described above, even though the bottom plate 420 is manufactured as a plastic injection-molded product, the mechanical properties of the bottom plate 420 may be improved through the reinforcement member 500, thereby securing structural stability. Compared to the case where the cell assembly 100 is supported only by the bottom plate 420, the entire combined structure including the reinforcement member 500 may support the load of the cell assembly 100, thereby ensuring structural safety.

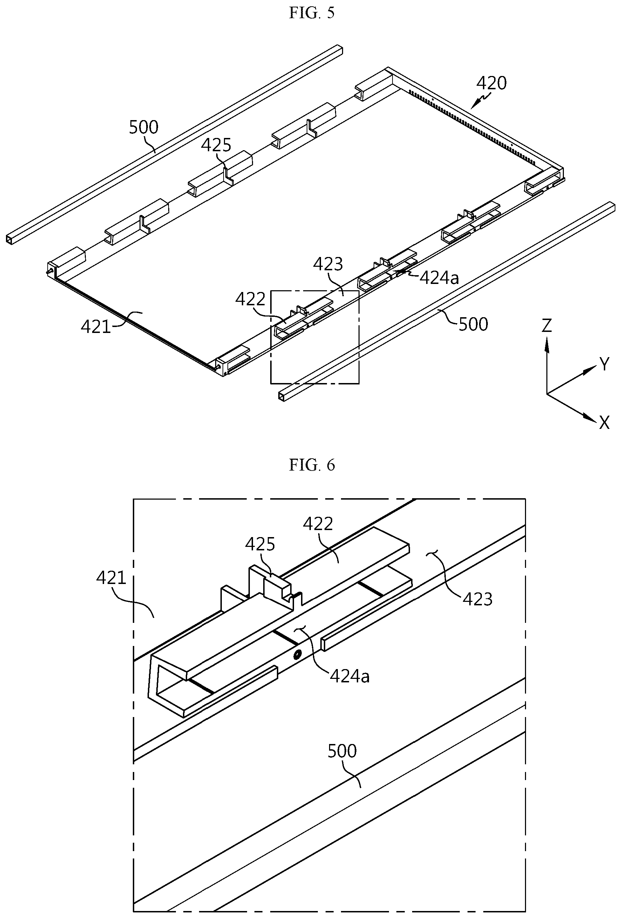

FIG. 5 is a perspective view illustrating a bottom plate and a reinforcement member of a battery pack according to an embodiment of the present disclosure, and FIG. 6 is a partially enlarged view of FIG. 5.

As shown in FIGS. 5 and 6, the support frames 422 of the bottom plate 420 are provided on edges extending in an arrangement direction of the cell assemblies 100, and protrude upward at predetermined intervals in the arrangement direction of the cell assemblies 100. In addition, the bottom plate 420 may further include a concave portion 423 provided between adjacent support frames 422. Here, the arrangement direction of the cell assemblies 100 is the same as the stacking direction of the battery cells 101, and the edges extending in the arrangement direction of the cell assemblies 100 include edges on both sides of the bottom plate 420 along the X-axis direction.

In addition, the support frame 422 is configured such that an outer surface is recessed inward, thereby forming the insertion portion 424a. The recessed form is configured in substantially a " 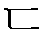 " shape which matches the reinforcement member 500 in shape. Meanwhile, any recessed form may be possible, instead of the " 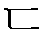 " shape, as long as it matches the reinforcement member 500 in shape. The concave portion 423 may be located between two adjacent support frames 422, as shown in FIG. 6. The support frame 422 may further include a guide rib 425 formed thereon. The guide rib 425 is located between the cell assemblies 100 to provide a gap against the bus-bar frame assembly 300.

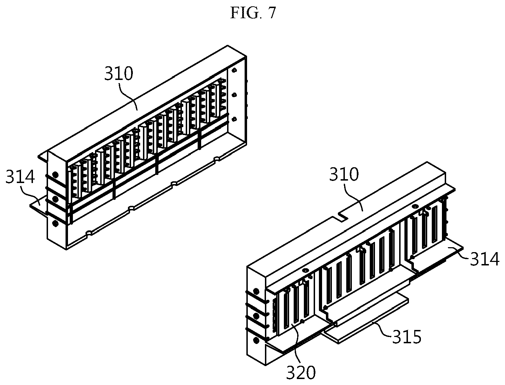

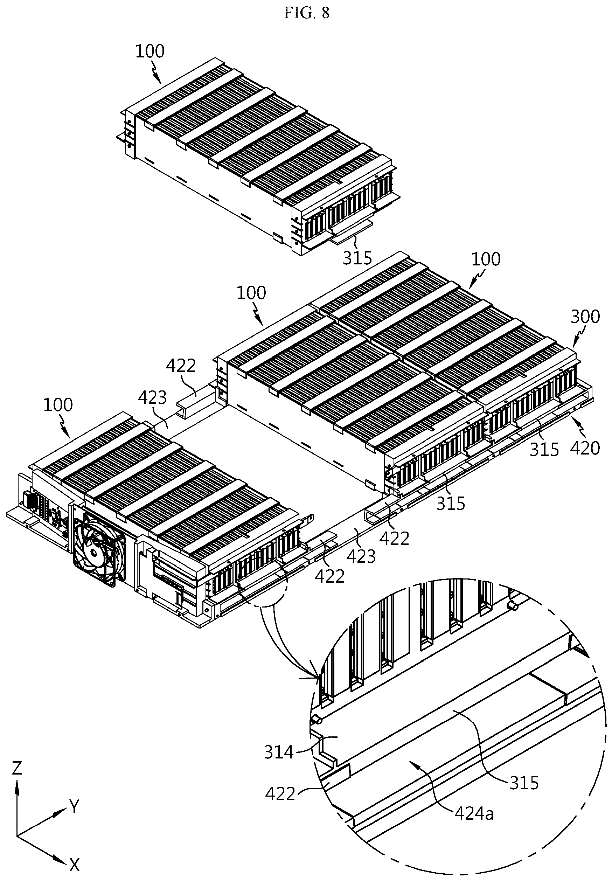

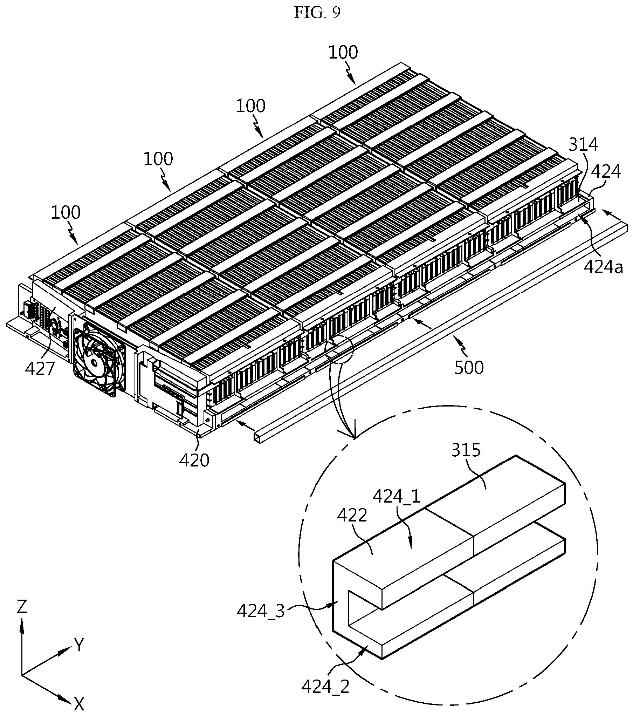

FIG. 7 is a detailed diagram of the bus-bar frame in FIG. 4. FIGS. 8 and 9 are diagrams illustrating the assembly process or assembly structure of a bottom plate and a plurality of cell assemblies according to an embodiment of the present disclosure.

The concave portion 423 may be configured to match, in shape, the seating guide block 315 of the bus-bar frame 310, as shown in FIGS. 7 and 8. Accordingly, the cell assemblies 100 may be stably mounted and stored on the bottom plate 420.

Next, the assembly structure and fixing structure between the bottom plate 420 and the plurality of cell assemblies 100 will be described with reference to FIGS. 8 and 9.

Each cell assembly 100 includes a bus-bar frame assembly 300 with a seating guide block 315, and the bottom plate 420 has concave portions 423 at predetermined intervals. The number of seating guide blocks 315 provided in the cell assemblies 100 are the same as the number of concave portions 423 provided in the bottom plate 420.

The support frames 422 protrude around the concave portion 423. The seating guide block 315 may be inserted into the concave portion 423 while passing between neighboring support frames 422 from top to bottom, that is, in the Z-axis direction. The seating guide block 315 is easily inserted into the concave portion 423 by passing vertically between the support frames 422. In addition, the concave portion 423 may be configured on the edges of the bottom plate 420 such that, when the seating guide block 315 of each cell assembly 100 is inserted into each corresponding concave portion 423, the cell assemblies 100 are spaced a predetermined distance apart from each other on the bottom plate 420. In addition, the bus-bar frame 310 of each cell assembly 100 is provided with a mounted plate 314 that may be disposed in contact with the upper surface of the support frame 422, as shown in FIGS. 3 and 7.

In the battery pack 10 according to the present disclosure including the above-described configuration, if each cell assembly 100 is assembled to the bottom plate 420 such that the seating guide block 315 and the concave portion 423 are coupled to match each other in shape, as shown in FIG. 8, the plurality of cell assemblies 100 may be easily disposed at the correct positions with respect to the bottom plate 420, respectively. In addition, in this case, the guide rib 425 helps guide the positions during assembly, and the neighboring cell assemblies 100 may be clearly spaced apart from each other after assembly. According to this implemented configuration of the present disclosure, since the neighboring cell assemblies 100 are spaced a predetermined distance apart from each other, it is possible to delay transfer of flame from the battery cell 110 in which thermal runaway occurs to the battery cell 110 in another cell assembly 100 adjacent thereto. Accordingly, the structural stability of the battery pack 10 may be strengthened.

In addition, since each cell assembly 100 is inserted such that the seating guide block 315 fits into the concave portion 423 between the two support frames 422, it may be fixed in the Y-axis direction with respect to the bottom plate 420 in FIG. 8. That is, since the seating guide block 315 of the bus-bar frame 310 is inserted into the concave portion 423 of the bottom plate 420, and since the support frames 422 protrude around the concave portion 423 to restrict movement of the cell assembly 100 to the left and right (in the Y-axis direction), the cell assembly 100 may not move in the Y-axis direction after seated on the bottom plate 420.

Referring to FIG. 9, when the cell assembly 100 is seated on the bottom plate 420 while each seating guide block 315 is inserted into each corresponding concave portion 423, the seating guide block 315 and the support frame 422 may be configured to form a continuous assembled wall 424 in the arrangement direction of the cell assemblies 100. That is, the seating guide block 315 and the support frame 422 may be disposed such that their inner spaces communicate with each other, and may be disposed such that their inner spaces communicate with the inner spaces of another neighboring seating guide block 315 and support frame 422, so that the reinforcement member 500 may be inserted and disposed inside such spaces. That is, in the state where the cell assembly 100 including the bus-bar frame assembly 300 is installed on the bottom plate 420, the reinforcement member 500 may be inserted to pass through the support frame 422 and the seating guide block 315. Therefore, the reinforcement member 500 may be inserted into the insertion portion 424a, thereby coupling the bus-bar frame assembly 300 and the bottom plate 420 via the bus-bar frame assembly 300. As described above, the reinforcement member 500 is inserted between the bus-bar frame assembly 300 and the bottom plate 420, while passing between the bottom plate 420 and the bus-bar frame 310, thereby coupling the same to each other.

The assembled wall 424 is configured such that an outer surface is recessed inward, thereby defining the insertion portion 424a of the bottom plate 420. As shown in FIG. 9, the reinforcement member 500 may be inserted into the insertion portion 424a from the side.

The reinforcement member 500 may be configured in a rod shape with a length corresponding to the length of the assembled wall 424. This reinforcement member 500 may be applied to both edges of the bottom plate 420 substantially in the same manner.

More specifically, the assembled wall 424 includes an upper reception wall 424_1, a lower reception wall 424_2, and a side reception wall 424_3, and the reinforcement member 500 is a rectangular steel pipe. The upper portion of the reinforcement member 500 may come into contact with the upper reception wall 424_1, the lower portion of the reinforcement member 500 may come into contact with the lower reception wall 424_2, and one side portion of the reinforcement member 500 may come into contact with the side reception wall 424_3.

The upper reception wall 424_1 by the support frame 422 of the bottom plate 420 and the upper reception wall 424_1 by the seating guide block 315 of the bus-bar frame 310 are formed side by side and have no step therebetween. The lower reception wall 424_2 by the support frame 422 and the lower reception wall 424_2 by the seating guide block 315 are also formed side by side and have no step therebetween. The side reception wall 424_3 by the support frame 422 and the side reception wall 424_3 by the seating guide block 315 are also formed side by side and have no step therebetween. Therefore, the inner spaces by the assembled wall 424 communicate with each other in the X-axis, Y-axis, and Z-axis directions to integrally form the insertion portion 424a, so that the reinforcement member 500 may be stably inserted into the insertion portion 424a. Furthermore, the position of the reinforcement member 500 after being inserted into the insertion portion 424a is restricted in the X-axis, Y-axis, and Z-axis directions.

Meanwhile, the bottom plate 420 may be further enlarged according to an increase in size of the battery pack 10, and if it is difficult to manufacture large injection-molded products of 1m or more, which increases cost, the bottom plate 420 may be divided into two or more parts to be injection-molded, and then assembled. In this case, the reinforcement member 500 may be inserted into the insertion portions 424a of the two or more parts of the bottom plate 420 to couple the two or more parts of the bottom plate 420. There is no limitation as to the expansion of the reinforcement member 500 by increasing the number of parts and the length thereof. The reinforcement member 500 may serve to support the load of the bottom plate 420 while assembling two or more parts thereof.

On the other hand, the rubber packing 510 shown in FIG. 3 may be applied when inserting the reinforcement member 500 so that the reinforcement member 500 is not easily separated from the insertion portion 424a. For example, the rubber packing 510 may be attached to the reinforcement member 500 and then pressed into the insertion portion 424a to be coupled to the support frame 422 of the bottom plate 420. The rubber packings 510 are intended to fix the reinforcement member 500 to the bottom plate 420, and the shapes, numbers, or locations thereof are not specifically limited.

The rubber packing 510 is one example of a sealing member. The battery pack 10 of the present disclosure may further include such a sealing member to fix the position of the reinforcement member 500. For assembly, the reinforcement member 500a may be fitted into the insertion portion 424a by applying the sealing member thereto. Then, assembly is easy, and the position may be surely fixed by the sealing member after assembly. The coupling between the reinforcement member 500 and the bottom plate 420 and between the reinforcement member 500 and the bus-bar frame 310 may be further strengthened by the above-described assembly method.

In the example shown in FIG. 3, the rubber packing 510 covers the inner side surface and the upper and lower surfaces of the reinforcement member 500. For example, since it has a cross-section of substantially a " 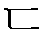 " shape, it may cover the reinforcement member 500, excluding the side surface directed outward when the reinforcement member 500 is inserted into the insertion portion 424a. For example, the rubber packing 510 may have a size similar to the length of the support frame 422. This rubber packing 510 may be interposed between the reinforcement member 500 and the insertion portion 424a without affecting other members, thereby ensuring the assembly and positioning of the reinforcement member 500.

According to this implemented configuration, all cell assemblies 100 may be fixed to the bottom plate 420 in the X-axis, Y-axis, and Z-axis directions. That is, each cell assembly 100 is inserted between the support frames 422 (on both edges) of the bottom plate 420 so as to be restricted from moving in the X-axis direction. Since the support frame 422 and the seating guide block 315 are fixed by the reinforcement member 500, movement of the seating guide block 315 is restricted in the Y-axis direction and the Z-axis direction.

Afterwards, the top plate 410 may be further assembled to secondary prevent the reinforcement member 500 from moving, thereby completing the battery pack 10. As shown in FIG. 1 as well, the top plate 410 has a structure capable of completely covering the reinforcement member 500 such that it is not separated when coupled to the bottom plate 420. In this battery pack 10, the reinforcement member 500 is not exposed to the outside and prevented from being separated, and the inflow of foreign substances such as external air and moisture through the assembly area is blocked, thereby preventing deterioration.

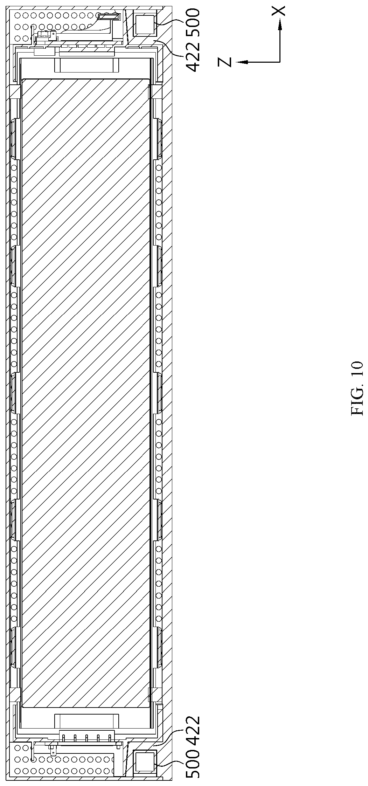

FIG. 10 is a cross-sectional view of the battery pack in FIG. 1, which shows a cross-section perpendicular to the Y-axis direction.

As shown in FIG. 10, the reinforcement member 500 is inserted into the seating guide block 315 of each cell assembly 100 to be restricted from moving in the X-axis direction and Z-axis direction. In addition, as described above, the seating guide block 315 of each cell assembly 100 is inserted into the concave portion 423 to be restricted from moving in the Y-axis direction. As described above, the seating guide block 315 and the support frame 422 also constrain the position of the reinforcement member 500 in the longitudinal and height directions of the reinforcement member 500.

In addition, since the reinforcement member 500 is inserted to pass through the support frame 422 of the bottom plate 420 and the seating guide block 315 of the bus-bar frame 310 of the cell assembly 100, the reinforcement member 500 may fix the bottom plate 420 and the cell assembly 100. That is, the bottom plate 420 and the bus-bar frame assembly 300 may be fixed to each other by the reinforcement member 500. As described above, it can be seen that the movement in the X-axis and Z-axis directions may be restrained using the reinforcement member 500, the bottom plate 420, and the bus-bar frame 310 without bolts and nuts.

As described above, the bottom plate 420 and the bus-bar frame 310 may be manufactured as plastic structures through injection molding, and the bottom plate 420 and bus-bar frame 310, divided into two parts, are assembled and fixed to each other by inserting the reinforcement members 500 to be fixed from the side. The bottom plate 420 and bus-bar frame 310 may be coupled without bolts and nuts, and structural safety may be strengthened.

Processes using bolts and nuts require continuous management or checks for torque for fastening, omission of fastening, and loosening due to use of the product after fastening. Additional processes for fastening and checks of fastening also cause a problem of increasing tact time. According to the present disclosure, the use of bolts and nuts may be minimized, making it easy to manage processes, and tact time does not increase.

Processes using bolts and nuts require continuous management or checks for torque for fastening, omission of fastening, and loosening due to use of the product after fastening. Additional processes for fastening and checks of fastening also cause a problem of increasing tact time. The present disclosure proposes a structure of structurally assembling and fixing internal components by minimizing the fixing structure using bolts and nuts in the battery pack 10.

According to the present disclosure, the design and management factors of the battery pack 10 may be minimized, thereby suppressing the problems resulting therefrom. That is, it is possible to provide a battery pack 10 that has fewer design variables to be considered to fix internal pack components than those when using bolts and nuts, is easier to manage processes than when using bolts and nuts, and does not increase tact time. According to the present disclosure, material costs are reduced by simplifying the structure and reducing the number of parts. According to the present disclosure, productivity is improved due to reduced tact time.

The bottom plate 420 proposed as the pack case 400 in the present disclosure has insulation and is lighter than the existing battery pack case. In the present disclosure, the reinforcement member 500 is applied to reinforce the rigidity of the bottom plate 420, which may be a plastic injection-molded product. As described above, according to the present disclosure, the reinforcement member 500, such as a mechanical structural steel pipe, may be applied to the bottom plate 420, which may be a plastic injection-molded product, to strengthen the structure and reduce the weight of the battery pack.

In particular, the present disclosure suggests modification of the structures of the bus-bar frame 310 and bottom plate 420 in order to insert or fix the reinforcement member 500 from the side, and enables the bus-bar frame 310 and bottom plate 420 to be coupled by the reinforcement member 500. To this end, in the battery pack 10 according to the present disclosure, the bus-bar frame 310 has the seating guide block 315 provided, as a protrusion, at the bottom, and the bottom plate 420 has the support frames 422 capable of implementing the insertion portion 424a on both sides thereof, so that as the reinforcement members 500 are inserted into both sides of the battery pack 10 when configuring the battery pack 10 using a plurality of cell assemblies 100, the reinforcement member 500 extending in the longitudinal direction via the seating guide block 315 and the support frame 422 may fix the cell assembly 100 including the bus-bar frame assembly 300 and the bottom plate 420.

According to this configuration of the present disclosure, the cell assembly 100 may be stably fixed and the weight of the battery pack 10 may be reduced. It is possible to perfectly implement insulation by applying injection-molded materials without separate insulating components. In addition, compared to the case where the cell assembly 100 is supported only by the bottom plate 420, the entire combined structure may support the load of the cell assembly 100 through the reinforcement member 500 passing between the bottom plate 420 and the bus-bar frame 310, thereby ensuring structural safety.

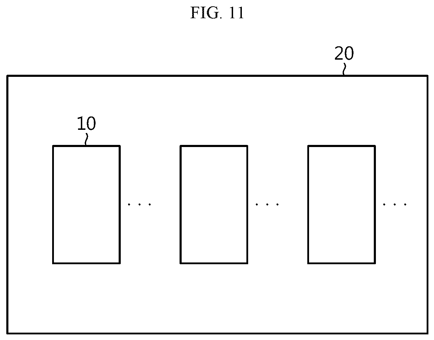

FIG. 11 is a schematic diagram of an energy storage system according to the present disclosure.

An energy storage system 20 may include one or more battery packs 10 according to the present disclosure described above. In particular, in order to provide a large energy capacity, the energy storage system 20 may include a plurality of battery packs 10 according to the present disclosure, which are electrically connected to each other. In addition, the energy storage system 20 according to the present disclosure may further include various other elements of the energy storage system known at the time of filing the present disclosure. Moreover, this energy storage system 20 may be used in various places or devices, such as smart grid systems or electric charging stations.

For example, the energy storage system 20 may include a plurality of battery racks including the battery packs 10 according to the present disclosure. The battery packs 10 may be configured to be accommodated in a rack case (not shown) while being arranged in the up/down direction. A plurality of battery packs 10 may be mounted inside the rack case so as to be spaced apart from each other in the up/down direction. The rack case may have a storage space with an opening such that spaces between the plurality of battery packs 10 communicate with each other in the up/down direction. The battery rack may be equipped with a rack BMS (Battery Management System) at the top of the plurality of battery packs 10. Here, the rack BMS may be a battery management system that centrally controls charging and discharging of the plurality of battery packs 10 provided in the battery rack. In addition, the plurality of battery racks may be electrically connected to each other through a rack bus-bar (not shown).

The energy storage system 20 according to the present disclosure may include the battery pack 10 according to the present disclosure, utilizing the advantages of the battery pack 10. Since the electric insulation and structural safety of the battery pack 10 are secured, the energy storage system 20 including the same is also safe. Since the structural safety of the battery pack 10 is ensured and since the weight thereof is reduced, it is easy to transport and install the battery pack 10. Since the material cost of the battery pack 10 is reduced and since productivity thereof is improved, it is possible to also reduce the production cost of the energy storage system 20 including the same.

Although terms indicating directions such as up, down, left, right, front, and back directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference Numerals]

| | | | |
|---|---|---|---|
| 10: | Battery pack | 20: | Energy storage system |
| 100: | Cell assembly | 101: | Battery cell |
| 300: | Bus-bar frame assembly | 310: | Bus-bar frame |
| 314: | Mounted plate | 315: | Seating guide block |
| 320: | Bus-bar | 400: | Pack case |
| 410: | Top plate | 420: | Bottom plate |
| 422: | Support frame | 423: | Concave portion |
| 424: | Assembled wall | 424a: | Insertion portion |
| 427: | Front plate | 500: | Reinforcement member |
| 510: | Rubber packing | | |

## Claims

1. A battery pack comprising:
at least one cell assembly comprising a bus-bar frame assembly and a plurality of battery cells;
a bottom plate configured such that the cell assembly is seated thereon; and
a reinforcement member configured to fix the bus-bar frame assembly and the bottom plate to each other.

2. The battery pack according to claim 1,
wherein the bottom plate comprises:
a base plate on which the cell assembly is seated; and
a support frame provided on opposite sides of an upper surface of the base plate and having an insertion portion configured such that an outer surface thereof is recessed inward, and
wherein the reinforcement member is inserted into the insertion portion.

3. The battery pack according to claim 2,
wherein the base plate and the support frame are integrally injection-molded.

4. The battery pack according to claim 2,
wherein the reinforcement member is inserted into the insertion portion to connect the bus-bar frame assembly and the bottom plate via the bus-bar frame assembly.

5. The battery pack according to claim 1,
wherein the reinforcement member is a pair of steel pipes.

6. The battery pack according to claim 1,
wherein the bottom plate is made of a plastic material, and
wherein the reinforcement member is made of a metal material.

7. The battery pack according to claim 1,
further comprising a rubber packing configured to fix the position of the reinforcement member.

8. The battery pack according to claim 2,
wherein the at least one cell assembly is a plurality of cell assemblies disposed side by side, and
wherein the support frame of the bottom plate is configured to
be provided on edges extending in the arrangement direction of the cell assemblies and protrude upward at predetermined intervals along the arrangement direction of the cell assembly to support the bus-bar frame assembly of each cell assembly.

9. The battery pack according to claim 8,
wherein the bottom plate further comprises a concave portion provided between the adjacent support frames,
wherein the bus-bar frame assembly of each cell assembly comprises a bus-bar frame made of an electrically insulating material, and
wherein the bus-bar frame comprises:
a mounted plate disposed on an upper surface of the support frame; and
a seating guide block protruding downward from the mounted plate so as to be inserted into the corresponding concave portion.

10. The battery pack according to claim 9,
wherein the mounted plate and the seating guide block are integrally injection-molded with the bus-bar frame.

11. The battery pack according to claim 9, wherein the seating guide block passes vertically between the support frames and is inserted into the concave portion.

12. The battery pack according to claim 9,
wherein the seating guide block and the support frame are configured to form a continuous assembled wall in the arrangement direction of the cell assemblies when the cell assemblies are seated on the bottom plate while each seating guide block is inserted into each corresponding concave portion, and
wherein the assembled wall defines the insertion portion.

13. The battery pack according to claim 12,
wherein the seating guide block and the support frame restrict a movement of the reinforcement member in a longitudinal direction and a height direction of the reinforcement member.

14. The battery pack according to claim 12, wherein the assembled wall comprises an upper reception wall, a lower reception wall, and a side reception wall,
wherein the reinforcement member is a rectangular steel pipe, and
wherein the upper portion of the steel pipe is in contact with an upper reception wall, the lower portion of the steel pipe is in contact with the lower reception wall, and one side portion of the steel pipe is in contact with the side reception wall.

15. An energy storage system comprising at least one battery pack according to any one of claims 1 to 14.
